(19) **Europäisches Patentamt / European Patent Office / Office européen des brevets**

(11) **EP 4 355 562 B1**

(12) **FASCICULE DE BREVET EUROPEEN**

(45) Date de publication et mention
de la délivrance du brevet:
**18.02.2026 Bulletin 2026/08**

(21) Numéro de dépôt: **22740939.8**

(22) Date de dépôt: **08.06.2022**

(51) Classification Internationale des Brevets (IPC):
***B29D 30/00*** *(2006.01)* ***B29D 30/06*** *(2006.01)*

(52) Classification Coopérative des Brevets (CPC):
**B29D 30/0005;** B29D 2030/0011

(86) Numéro de dépôt international:
**PCT/FR2022/051083**

(87) Numéro de publication internationale:
**WO 2022/263746 (22.12.2022 Gazette 2022/51)**

(54) **PROCEDE ET DISPOSITIF DE TRAITEMENT THERMIQUE D'UN PNEUMATIQUE PRESENTANT DES PROPRIETES DE RESISTANCE AU ROULEMENT AMELIOREES**

VERFAHREN UND VORRICHTUNG ZUR WÄRMEBEHANDLUNG EINES REIFENS MIT VERBESSERTEN ROLLWIDERSTANDSEIGENSCHAFTEN

METHOD AND DEVICE FOR HEAT TREATMENT OF A TYRE HAVING IMPROVED ROLLING RESISTANCE PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2021 FR 2106416**

(43) Date de publication de la demande:
**24.04.2024 Bulletin 2024/17**

(73) Titulaire: **COMPAGNIE GENERALE DES ETABLISSEMENTS MICHELIN
63000 Clermont-Ferrand (FR)**

(72) Inventeurs:
• MANSUY, Philippe
**63040 CLERMONT-FERRAND Cedex 9 (FR)**
• BESTGEN, Luc
**63040 CLERMONT-FERRAND Cedex 9 (FR)**
• COSTE, Nathalie
**63040 CLERMONT-FERRAND Cedex 9 (FR)**

(74) Mandataire: **M.F.P. Michelin
DCJ/PI - F35 - Ladoux
23 place des Carmes-Déchaux
63040 Clermont-Ferrand Cedex 9 (FR)**

(56) Documents cités:
**EP-A1- 3 266 623 FR-A1- 2 468 473**

**Description**

La présente invention concerne un procédé de traitement d'un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La résistance au roulement est une des forces qui s'oppose à l'avancement du véhicule. Le coefficient de Résistance au Roulement d'un pneumatique ($C_{RR}$) est la force de résistance au roulement ramenée à la charge portée par le pneumatique. Le coefficient est exprimé en kg/t.

La résistance au roulement est liée essentiellement à la déformation du pneumatique et donc des différents mélanges qui le constituent. Notamment les mélanges élastomériques présents dans la zone des bourrelets du pneumatique associés aux mélanges élastomériques constituant les flancs représentent de 20% à 30% de la résistance au roulement du pneumatique. Les mélanges élastomériques constituant la bande de roulement contribuent pour leur part à hauteur de 60% à 80% de la résistance au roulement du pneumatique.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet devient pénalisante.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à faible hystérèse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former un ensemble de spires dont l'angle de pose par rapport à la direction circonférentielle est inférieur à 2.5°.

De telles architectures de pneumatiques selon l'invention peuvent permettre s'améliorer les performances en termes de résistance au roulement en modifiant la nature des mélanges élastomériques constitutifs des calandrages des couches de travail de l'armature sommet ou bien des mélanges proches des extrémités de ces nappes. De telles réalisations sont notamment décrites dans les demandes de brevet WO 2013/053879 et WO 2013/053880.

Afin d'augmenter encore la durée de vie des pneumatiques, il est usuel de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Ces modes de réalisations des pneumatiques mettent en évidence que les conceptions de pneumatiques sont toujours un compromis de performances obtenus par des choix de matériaux et/ou d'architecture par exemple de l'armature sommet du pneumatique.

Le document EP 3 266 623 A1 décrit une méthode de recuit d'un pneumatique constitué d'une première partie à base d'une résine thermoplastique et d'une partie élastomérique, les parties étant liées par une colle de type RFL.

Les inventeurs se sont ainsi donnés pour mission d'être en mesure de fournir des pneumatiques dont les performances d'usure et les performances d'endurance sont conservées et dont les performances en termes de résistance au roulement sont améliorées sans aucun autre compromis.

Ce but est atteint selon l'invention par un procédé de traitement thermique d'un pneumatique selon lequel le pneumatique est maintenu dans une enceinte à une température T comprise entre 60 °C et 120°C pendant une durée t, exprimée en heure, telle que :

$$0.5*(1-[(T-60)/100])*\tau \leq t \leq 2*(1-[(T-60)/100]) *\tau,$$

avec

$$\tau = 111*\exp(-5.55*[(T-60)/100]).$$

Les essais réalisés ont montré que les pneumatiques ayant subi un traitement thermique selon l'invention présentent des performances d'usure et d'endurance satisfaisantes quelles que soient les conditions d'utilisation des pneumatiques semblables aux mêmes pneumatiques n'ayant pas subi ce traitement. Ils présentent en outre des performances de résistance au roulement supérieures à celles des pneumatiques n'ayant pas subi ce traitement thermique.

En effet, des essais réalisés en faisant varier la température et le temps de maintien à ladite température ont montré des gains compris entre 2 et 6% concernant la résistance au roulement des pneumatiques.

Par ailleurs, les inventeurs ont encore mis en évidence qu'un second traitement thermique des pneumatiques ne modifie plus de manière significative la performance relative à la résistance au roulement du pneumatique dès lors que le premier traitement thermique est réalisé conformément à l'invention. Au sens de l'invention, l'expression « de manière significative » doit être interprétée comme une modification d'au moins 1%.

Malgré des études approfondies, les inventeurs ne savent pas expliquer l'origine de gain en résistance au roulement lors d'un tel traitement thermique, si ce n'est qu'ils considèrent que le traitement thermique conduit à une évolution des propriétés des mélanges élastomériques.

En outre, d'autres essais consistant en une utilisation des pneumatiques en roulage sur une machine de roulage, et conduisant à une élévation de la température desdits pneumatiques pendant une durée correspondant à peu près à un couple température/durée conforme au traitement thermique selon l'invention ne conduisent pas à une amélioration des propriétés de résistance au roulement du pneumatique comparable au gain obtenu selon l'invention sur pneumatique neuf.

Conformément à l'invention, la température T du traitement thermique est supérieure ou égale à 60°C. Les inventeurs ont su montrer qu'en dessous de cette température, aucun effet significatif sur la résistance au roulement ne peut être obtenu pendant une durée acceptable de traitement thermique.

La température T du traitement thermique est conformément à l'invention inférieure ou égale à 120°C pour éviter tous risques de surcuisson du pneumatique pouvant conduire à des performances amoindries du pneumatique notamment en termes d'endurance.

Selon un mode de réalisation préféré de l'invention, la température T du traitement thermique est inférieure ou égale à 90°C pour garantir tous risques de dégradation des performances d'endurance du pneumatique.

De préférence encore selon l'invention, notamment pour assurer un temps de traitement thermique inférieur à une centaine d'heures, la température T du traitement thermique est supérieure ou égale à 65°C.

Selon une réalisation avantageuse de l'invention, la durée t, exprimée en heure, satisfait la relation : $2/3*(1-[(T-60)/100])*\tau \leq t$.

Avantageusement également selon l'invention, la durée t, exprimée en heure, satisfait la relation : $t \leq 1.4*(1-[(T-60)/100])*\tau$.

Selon une variante de réalisation de l'invention, le traitement thermique est réalisé dans une enceinte en présence de vapeur d'eau. Les inventeurs ont montré qu'en présence de vapeur d'eau, il était possible de diminuer le temps de traitement pour un gain en résistance au roulement donné. Les inventeurs pensent qu'une atmosphère humide favorise les échanges thermiques avec le pneumatique.

L'invention propose encore un dispositif pour la mise en œuvre du procédé de traitement thermique selon l'invention décrit précédemment.

Ce dispositif est avantageusement constitué d'une enceinte, de type étuve, dimensionnée pour enfermer au moins un pneumatique et associée à un système de chauffage pour chauffer l'atmosphère interne de l'étuve.

Avantageusement encore, le système de chauffage est associé à une production de vapeur d'eau pour permettre de créer une atmosphère humide dans l'enceinte et favoriser les échanges thermiques avec les pneumatiques.

Selon un mode de réalisation avantageux de l'invention, l'enceinte est dimensionnée pour recevoir plusieurs pneumatiques afin de les traiter thermiquement simultanément.

Le traitement thermique pouvant être de plusieurs dizaines d'heures, la productivité sera peu impactée dès lors qu'un grand nombre de pneumatiques peuvent être traités simultanément.

D'autres détails et caractéristiques avantageux de l'invention ressortiront ci-après de la description des exemples de réalisation de l'invention.

Des essais ont été réalisé avec des pneumatique MICHELIN du type 315/70 R 22.5 X Multi Energy Z. Dix pneumatiques ont été testés et ont subi des traitements thermiques dans une étuve dans une atmosphère sèche, les traitements étant conformes à l'invention.

Chacun des pneumatiques a subi un traitement thermique à une température et une durée qui lui est propre.

La résistance au roulement est tout d'abord mesurée avant le traitement thermique, le pneumatique étant neuf, puis une nouvelle fois après le traitement thermique.

Les mesures de résistance au roulement ont été effectuées sur chacun des pneumatiques dans des conditions de roulage identiques selon le Règlement n° 117 de la Commission économique pour l'Europe des Nations unies (CEE-ONU). Les résultats des mesures sont exprimés en kg/t.

Dans le tableau qui suit, nous faisons apparaître ces mesures de résistance au roulement pour chacun des pneumatiques avant et après traitement ainsi que les conditions de température et de durée du traitement thermique pour chacun des pneumatiques. La dernière colonne chiffre le gain, exprimé en pourcentage, obtenu en résistance au roulement résultant du traitement thermique.

| 315/70 R 22.5 X Multi Energy Z | Résistance au roulement avant traitement | Traitement thermique | | Résistance au roulement après traitement | Gain (%) |
| --- | --- | --- | --- | --- | --- |
| | | t (heures) | T (°C) | | |
| A | 4.6 | 83 | 65 | 4.35 | 5.43 |
| B | 4.58 | 67 | 70 | 4.39 | 4.15 |
| C | 4.58 | 36 | 80 | 4.4 | 3.93 |
| D | 4.61 | 5.63 | 100 | 4.44 | 3.69 |
| E | 4.57 | 10.83 | 100 | 4.4 | 3.72 |
| F | 4.57 | 13.13 | 100 | 4.4 | 3.72 |
| G | 4.59 | 1.25 | 115 | 4.46 | 2.83 |
| H | 4.59 | 2.5 | 115 | 4.43 | 3.49 |

D'autres pneumatiques du même type ont subi des traitements thermiques non conformes à l'invention. Les résultats obtenus sont présentés dans le tableau suivant selon un modèle de présentation identique au précédent.

| 315/70 R 22.5 XMEZ | Résistance au roulement avant traitement | Traitement thermique | | Résistance au roulement après traitement | Gain (%) |
| --- | --- | --- | --- | --- | --- |
| | | t (heures) | T (°C) | | |
| K | 4.58 | 2 | 65 | 4.58 | 0.00 |
| L | 4.61 | 1 | 100 | 4.57 | 0.87 |
| M | 4.61 | 240 | 50 | 4.59 | 0.43 |
| N | 4.59 | 2 | 130 | 4.59 | 0.00 |

Par ailleurs, des essais d'endurance ont été réalisés d'une part sur des pneumatiques neufs et d'autre part sur des pneumatiques neufs ayant subi un traitement thermique semblable à celui des pneumatiques A et sur des pneumatiques neufs ayant subi un traitement thermique semblable à celui des pneumatiques H du tableau précédent. Ces mêmes essais d'endurance sont réalisés avec des pneumatiques neufs ayant subi un traitement thermique semblable à celui des pneumatiques N.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques.

Les essais sont arrêtés lorsque lors de l'apparition d'une dégradation des pneumatiques.

Les essais ainsi réalisés ont montré que les distances parcourues lors de chacun de ces tests sont sensiblement identiques pour les pneumatiques n'ayant pas subi de traitement thermique que pour les pneumatiques ayant subi un traitement thermique du type A et H. Il apparaît donc que les pneumatiques ayant subi un traitement thermique selon l'invention présentent des performances sensiblement équivalentes en termes d'endurance à celles des pneumatiques de référence.

Les pneumatiques ayant subi un traitement thermique du type N ont quant à eux parcouru des distances moins importantes, d'environ 20 % lors du test en ligne droite et d'environ 5 % lors du test imposant des efforts transversaux. Le traitement thermique dans les conditions de type N est équivalent à une surcuisson du pneumatique d'un facteur 2.5. Et il est connu de l'homme du métier qu'une telle surcuisson peut conduire à une réversion ou dépolymérisation des mélanges conduisant à une baisse des propriétés mécaniques des matériaux telles que par exemple la rigidité et/ou l'allongement à rupture. Ces modifications de propriétés des matériaux peuvent expliquer la diminution des propriétés d'endurance d'un pneumatique ayant subi un traitement thermique du type N.

Il ressort de ces essais que les pneumatiques selon l'invention permettent d'améliorer les performances en termes de résistance au roulement et en présentant des performances en termes d'endurance satisfaisantes.

Les inventeurs ont par ailleurs fait des essais de mise en œuvre du procédé de traitement thermique selon l'invention en utilisant des containers 40 pieds qui permettent de disposer 130 pneumatiques de sorte que l'air circule facilement entre les pneumatiques. Un système de chauffage associé à un système de régulation a été associé au container pour permettre de chauffer l'air ambiant au sein du container, préalablement isolé thermiquement par l'extérieur.

Prenant en compte le temps de cuisson d'un pneumatique 315/70R22.5 de l'ordre de 43 minutes, le temps de cuisson de 130 pneumatiques issus d'un même moule de cuisson est donc d'environ 93 heures. Les inventeurs ont ainsi réalisé un traitement thermique selon l'invention de 93 heures en maintenant une température de 63°C au sein du container. Une telle mise en œuvre du procédé de traitement thermique selon l'invention permet à l'issue du traitement de 130 pneumatiques de récupérer les 130 pneumatiques traités et de procéder au traitement des 130 pneumatiques qui ont pu être cuits dans le même moule de cuisson. Le gain moyen en résistance au roulement mesuré sur les pneumatiques traités dans ces conditions est de 5.12%.

Les inventeurs proposent ainsi un dispositif simple de réalisation et qui permet d'appliquer le procédé de traitement thermique selon l'invention quasiment en temps masqué au regard de la fabrication des pneumatiques.

**Revendications**

1.    - Procédé de traitement thermique d'un pneumatique **caractérisé en ce que** le pneumatique est maintenu dans une enceinte à une température T comprise entre 60 °C et 120°C pendant une durée t, exprimée en heure, telle que :

$$0.5*(1-[(T-60)/100])*\tau \le t \le 2*(1-[(T-60)/100]) *\tau,$$

avec

$$\tau = 111*\exp(-5.55*[(T-60)/100]).$$

2.    - Procédé de traitement thermique d'un pneumatique selon la revendication 1 **caractérisé en ce que** la température T est inférieure ou égale à 90°C.

3.    - Procédé de traitement thermique d'un pneumatique selon la revendication 1 ou 2 **caractérisé en ce que** la température T est supérieure ou égale à 65°C.

4.    - Procédé de traitement thermique d'un pneumatique selon l'une des revendications précédentes, **caractérisé en ce que** la durée t, exprimée en heure, satisfait la relation : $2/3*(1-[(T-60)/100])*\tau \le t$.

5.    - Procédé de traitement thermique d'un pneumatique selon l'une des revendications précédentes, **caractérisé en ce que** la durée t, exprimée en heure, satisfait la relation : $t \le 1.4*(1-[(T-60)/100]) *\tau$.

6.    - Procédé de traitement thermique d'un pneumatique selon l'une des revendications précédentes, **caractérisé en ce que** le traitement thermique est réalisé dans une enceinte en présence de vapeur d'eau.

**Patentansprüche**

1.    Verfahren zur Wärmebehandlung eines Reifens, **dadurch gekennzeichnet, dass** der Reifen in einer Kammer auf einer Temperatur T zwischen 60 °C und 120 °C gehalten wird während einer in Stunden angegebenen Dauer t, so dass:

$$0,5*(1-[(T-60)/100])*\tau \le t \le 2*(1-[(T-60)/100]) *\tau,$$

mit

$$\tau = 111*\exp(-5,55*[(T-60)/100]).$$

2.    Verfahren zur Wärmebehandlung eines Reifens nach Anspruch 1, **dadurch gekennzeichnet, dass** die Temperatur T 90 °C oder weniger beträgt.

3. Verfahren zur Wärmebehandlung eines Reifens nach Anspruch 1 oder 2, **dadurch gekennzeichnet, dass** die Temperatur T 65 °C oder mehr beträgt.

4. Verfahren zur Wärmebehandlung eines Reifens nach einem der vorhergehenden Ansprüche, **dadurch gekennzeichnet, dass** die in Stunden angegebene Dauer t die folgende Gleichung erfüllt: 2/3*(1-[(T-60)/100])*r ≤ t.

5. Verfahren zur Wärmebehandlung eines Reifens nach einem der vorhergehenden Ansprüche, **dadurch gekennzeichnet, dass** die in Stunden angegebene Dauer t die folgende Gleichung erfüllt: t ≤ 1,4*(1-[(T-60)/100]) *τ.

6. Verfahren zur Wärmebehandlung eines Reifens nach einem der vorhergehenden Ansprüche, **dadurch gekennzeichnet, dass** die Wärmebehandlung in einer Kammer in Gegenwart von Wasserdampf ausgeführt wird.

**Claims**

1. Method for the heat treatment of a tyre, **characterized in that** the tyre is kept in a chamber at a temperature T of between 60°C and 120°C for a duration t, expressed in hours, such that:

$$0.5*(1-[(T-60)/100])*\tau \leq t \leq 2*(1-[(T-60)/100]) *\tau,$$

with

$$\tau = 111*\exp(-5.55*[(T-60)/100]).$$

2. Method for the heat treatment of a tyre according to Claim 1, **characterized in that** the temperature T is less than or equal to 90°C.

3. Method for the heat treatment of a tyre according to Claim 1 or 2, **characterized in that** the temperature T is greater than or equal to 65°C.

4. Method for the heat treatment of a tyre according to one of the preceding claims, **characterized in that** the duration t, expressed in hours, satisfies the relationship: 2/3*(1-[(T-60)/100])*τ ≤ t.

5. Method for the heat treatment of a tyre according to one of the preceding claims, **characterized in that** the duration t, expressed in hours, satisfies the relationship: t ≤ 1.4*(1-[(T-60)/100]) *τ.

6. Method for the heat treatment of a tyre according to one of the preceding claims, **characterized in that** the heat treatment is carried out in a chamber in the presence of steam.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1389428
- FR 2728510
- WO 9924269 A
- WO 2013053879 A
- WO 2013053880 A
- US 6247512 B
- EP 3266623 A1